# EUROPÄISCHE PATENTANMELDUNG

(11) **EP 0 833 268 A2**
(43) Veröffentlichungstag der Anmeldung: **01.04.1998**
(21) Anmeldenummer: 97115286.3
(22) Anmeldetag: 03.09.1997
(51) Int. Cl.: G06K 7/00

(54) **Kartenlesevorrichtung**

(30) Priorität: 20.09.1996 DE 19638647
(71) Anmelder: SIEMENS AKTIENGESELLSCHAFT, 80333 München (DE)
(72) Erfinder: Hoolhorst, Albert, 4527 BE Aardenburg (NL)

(57) **Zusammenfassung**

Es wird eine Kartenlesevorrichtung mit einem Kontakttragerteil (1) und einem Kartenträgerteil (2) beschrieben, wobei das Kartenträgerteil mit einem Kartenaufnahmeabschnitt (22) zur Aufnahme einer zu lesenden Karte ausgebildet und zusammen mit der dort eingesetzten Karte zumindest teilweise in das oder auf das Kontaktträgerteil schiebbar ist. Die beschriebene Kartenlesevorrichtung zeichnet sich dadurch aus, daß das Kartenträgerteil einen mindestens einen Hebel (213, 214) enthaltenden Mechanismus aufweist, wobei der mindestens eine Hebel derart ausgebildet und angeordnet ist, daß ein Schwenken desselben im Zusammenwirken mit einer außerhalb des Kartenträgerteils liegenden Abstützstelle ein zumindest teilweises Herausziehen des Kartenaufnahmeabschnittes aus dem Kontaktträgerteil zur Folge hat.

## Beschreibung

Die vorliegende Erfindung betrifft eine Kartenlesevorrichtung gemäß dem Oberbegriff des Patentanspruchs 1, d.h. eine Kartenlesevorrichtung mit einem Kontaktträgerteil und einem Kartenträgerteil, wobei das Kartenträgerteil mit einem Kartenaufnahmeabschnitt zur Aufnahme einer zu lesenden Karte ausgebildet und zusammen mit der dort eingesetzten Karte zumindest teilweise in das oder auf das Kontaktträgerteil schiebbar ist.

Derartige Kartenlesevorrichtungen sind beispielsweise die in Mobiltelefonen verwendeten Lesevorrichtungen zum Entgegennehmen und/oder Weitergeben von durch eine oder für eine sogenannte SIM-Karte bzw. ein sogenanntes SIM-Modul bereitgestellten Informationen.

Die besagten SIM-Module werden in Mobiltelefonen vor allem zur Teilnehmeridentifizierung eingesetzt; "SIM" ist die Abkürzung für "Subscriber Identity Module". SIM-Module sind insbesondere aufgrund ihrer geringen Abmessungen (25 x 15 mm) sehr gut für den Einsatz in Mobiltelefonen geeignet.

Kartenlesevorrichtungen der im Patentanspruch 1 beanspruchten Art können jedoch auch Kartenlesevorrichtungen zum Lesen der "normalen" Chipkarten sein.

Die in Kartenlesevorrichtungen verwendbaren SIM-Module, "normalen" Chipkarten etc. sind allesamt Chips enthaltende Karten bzw. Chipkarten und werden im folgenden der Einfachheit halber kurz als Karten bezeichnet; der Vorgang des Entgegennehmens und/oder des Weitergebens von durch eine oder für eine Karte bereitgestellten Informationen wird nachfolgend der Einfachheit halber als Lesen der Karte bezeichnet.

Kartenlesevorrichtungen, die aus einem Kontaktträgerteil und einem in dieses oder auf dieses schiebbaren Kartenträgerteil bestehen, eignen sich unter anderem gut für den Einsatz in Mobiltelefonen. Sie sind nämlich einerseits leicht zu bedienen und weisen andererseits nur eine sehr geringe Größe auf.

Leicht zu bedienen sind derartige Kartenlesevorrichtungen deshalb, weil die zu lesenden Karten jeweils von außen, also ohne Abnehmen der Batterie oder dergleichen in die Kartenlesevorrichtungen einbringbar sind.

Klein auszubilden sind derartige Kartenlesevorrichtungen beispielsweise deshalb, weil im wesentlichen allein durch eine besondere Ausgestaltung des Kartenträgerteils, also ohne große und aufwendige Mechanik verhindert werden kann, daß die zum Kontaktieren der zu lesenden Karte vorgesehenen Kontaktelemente des Kontaktträgerteils während des Einschiebens und des Entfernens der zu lesenden Karte in das bzw. aus dem Kontaktträgerteil durch die Karte (deren Kontaktflächen) kurzgeschlossen werden.

Andererseits können sich bei derartigen Kartenlesevorrichtungen jedoch die zum Entfernen des Kartenträgerteils aus dem Kontaktträgerteil zu treffenden Maßnahmen als relativ aufwendig erweisen. Das Kartenträgerteil schließt nämlich unter anderem aus ästhetischen Gründen im in das Kontaktträgerteil eingeschobenen Zustand in der Regel mit dem Gehäuse des die Kartenlesevorrichtung enthaltenden Gerätes bündig ab und bietet dadurch keinen Ansatzpunkt, an welchem es wieder herausgezogen werden kann. Um das Kartenträgerteil wieder aus dem Kontaktträgerteil entfernen zu können, bedarf es daher eines speziellen Entriegelungs- bzw. Auswurfmechanismus. Dieser Entriegelungs- bzw. Auswurfmechanismus umfaßt in der Regel eine separate Auswurftaste, welche über einen Federn, lange Gestänge etc. aufweisenden Mechanismus eine gegebenenfalls vorhandene Arretierung des Kartenträgerteils im Kontaktträgerteil löst und/oder ein Auswerfen des Kartenträgerteils aus dem Kontaktträgerteil veranlaßt. Derartige Entriegelungs- bzw. Auswurfmechanismen beanspruchen bekanntermaßen relativ viel Platz und erfordern zudem einen nicht unerheblichen Aufwand bei der Herstellung der Kartenlesevorrichtungen.

Der vorliegenden Erfindung liegt daher die Aufgabe zugrunde, die Kartenlesevorrichtung gemäß dem Oberbegriff des Patentanspruchs 1 derart weiterzubilden, daß deren Kartenträgerteil auf einfache Weise unter Verwendung eines klein und einfach aufgebauten Mechanismus aus dem Kontaktträgerteil entfernbar ist.

Diese Aufgabe wird erfindungsgemäß durch die im kennzeichnenden Teil des Patentanspruchs 1 beanspruchten Merkmale gelöst.

Demnach ist vorgesehen, daß das Kartenträgerteil einen mindestens einen Hebel enthaltenden Mechanismus aufweist, wobei der mindestens eine Hebel derart ausgebildet und angeordnet ist, daß ein Schwenken desselben im Zusammenwirken mit einer außerhalb des Kartenträgerteils liegenden Abstützstelle ein zumindest teilweises Herausziehen des Kartenaufnahmeabschnittes aus dem Kontaktträgerteil zur Folge hat.

Der Auswurfmechanismus ist also im auszuwerfenden Kartenträgerteil selbst integriert, wobei das das Kartenträgerteil auswerfende Auswurfelement, nämlich der mindestens eine Hebel zugleich dasjenige Element des Auswurfmechanismus sein kann, über welches oder in unmittelbarer Nähe dessen der Auswurfmechanismus von außerhalb der Kartenlesevorrichtung betätigbar ist.

Der erfindungsgemäße Auswurfmechanismus läßt sich dadurch aus einer minimalen Anzahl von Einzelteilen zusammensetzen, die darüber hinaus - anders als bisher - nahe zusammenliegend anordenbar und in ihrer Gesamtheit auf engstem Raum unterbringbar sind. Insbesondere bei der Herstellung aus Kunststoff läßt er sich sogar zusammen mit dem Kartenträgerteil als eine einstückige Einheit ausbilden.

Es wurde folglich eine Kartenlesevorrichtung geschaffen, deren Kartenträgerteil auf einfache Weise unter Verwendung eines klein und einfach aufgebauten Mechanismus aus dem Kontaktträgerteil entfernbar ist.

Das Vorsehen des Auswurfmechanismus im (aus der Kartenlesevorrichtung herausnehmbaren) Kartenträgerteil ermöglicht zudem auf denkbar einfache Weise, den Auswurfmechanismus zu untersuchen, zu testen, zu warten, zu reparieren und/oder auszutauschen.

Vorteilhafte Weiterbildungen der Erfindung sind Gegenstand der Unteransprüche.

Die Erfindung wird nachfolgend anhand eines Ausführungsbeispiel unter Bezugnahme auf die Zeichnung näher erläutert. Es zeigen
- Figur 1A: eine Draufsicht auf ein Kontaktträgerteil einer erfindungsgemäß ausgebildeten Kartenlesevorrichtung,
- Figur 1B: eine Schnittdarstellung des in der Figur 1A gezeigten Kontaktträgerteils (Schnitt längs einer in der Figur 1A gezeigten Linie A-A),
- Figur 1C: eine Seitenansicht des in den Figuren 1A und 1B gezeigten Kontaktträgerteils,
- Figur 2A: eine Draufsicht auf ein Kartenträgerteil der erfindungsgemäß ausgebildeten Kartenlesevorrichtung,
- Figur 2B: eine Schnittdarstellung des in der Figur 2A gezeigten Kartenträgerteils (Schnitt längs einer in der Figur 2A gezeigten Linie B-B),
- Figur 2C: eine Schnittdarstellung des in den Figuren 2A und 2B gezeigten Kartenträgerteils (Schnitt längs einer in der Figur 2B gezeigten Linie C-C),
- Figur 3A: eine Draufsicht auf das Kartenträgerteil im mit dem Kontaktträgerteil verrasteten Zustand, und
- Figur 3B: eine Draufsicht auf das Kartenträgerteil während der Betätigung des Auswurfmechanismus desselben.

Die im folgenden beschriebene Kartenlesevorrichtung ist eine zum Lesen von SIM-Modulen ausgelegte Kartenlesevorrichtung. Dies bedeutet jedoch nicht, daß die Erfindung auf hierfür ausgelegte Kartenlesevorrichtungen beschränkt ist; die Erfindung ist auch bei Kartenlesevorrichtungen einsetzbar, die zum Lesen beliebiger anderer Karten (Chipkarten) ausgelegt sind.

Die beschriebene Kartenlesevorrichtung besteht im betrachteten Beispiel aus einem Kontaktträgerteil und einem Kartenträgerteil; die durch die Kartenlesevorrichtung zu lesende Karte wird in das Kartenträgerteil eingesetzt und zusammen mit diesem in das Kontaktträgerteil eingeschoben.

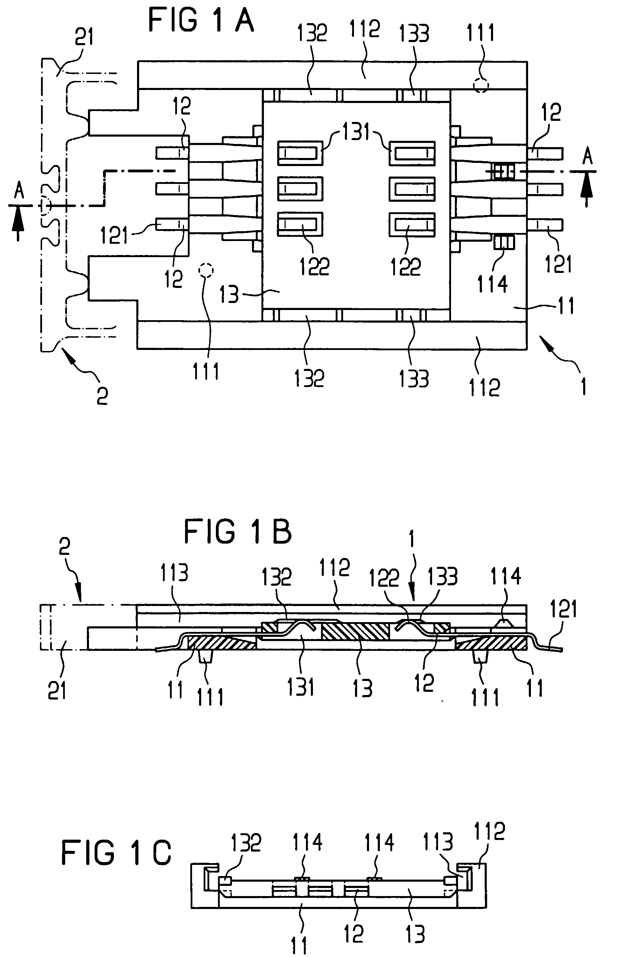

Das genannte Kontaktträgerteil ist in den Figuren 1A, 1B und 1C gezeigt; es ist dort mit dem Bezugszeichen 1 bezeichnet.

Das Kontaktträgerteil 1 besteht aus einem Isolierkörper 11, sechs Kontaktelementen in Form von Kontaktfedern 12 und einem Kontaktelementestellungsveränderungselement in Form einer Platte 13.

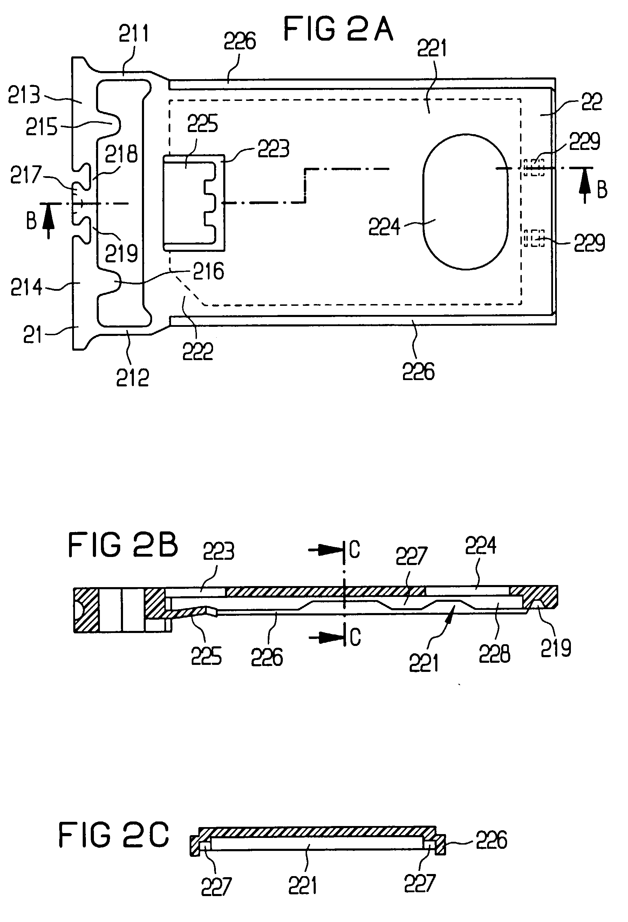

In den Figuren 1A und 1B sind durch gestrichelte Linien auch Teile des später insbesondere unter Bezugnahme auf Figur 2 näher beschriebenen Kartenträgerteils 2 im in das Kontaktträgerteil 1 eingeschobenen Zustand dargestellt.

Das Kontaktträgerteil 1, genauer gesagt der Isolierkörper 11 und die Kontaktfedern 12 desselben sind zur Montage auf einer (in den Figuren nicht gezeigten) elektrischen Leiterplatte ausgelegt. Der Isolierkörper 11 weist zu diesem Zweck, wie insbesondere aus den Figuren 1A und 1B ersichtlich ist, Montagezapfen 111 auf, welche in entsprechende Ausnehmungen in der elektrischen Leiterplatte einsteckbar und bei Bedarf dort auch befestigbar sind; die Kontaktfedern 12 sind an jeweils einem ihrer Enden als Lötfahnen 121 ausgebildet, welche beispielsweise unter Verwendung eines SMT-Lötverfahrens mit der Leiterplatte verlötbar sind.

Der Isolierkörper 11 ist derjenige Bestandteil des Kontaktträgerteils 1, der dieses, genauer gesagt dessen weitere Bestandteile zusammenhält und ein bestimmungsgemäßes Zusammenwirken derselben mit dem Kartenträgerteil 2 ermöglicht.

Die letztgenannte Funktion des Isolierkörpers 11 kann dieser insbesondere durch Vorsehen nutenartiger Aussparungen 113 in erhöhten Randabschnitten 112 an einander gegenüberliegenden Seiten des Isolierkörpers 11 erfüllen; die (einander zugewandten) nutenartigen Aussparungen 113 können, wie insbesondere aus der Figur 1C ersichtlich ist, als Führung für das mit dem Kontaktträgerteil 1 (durch ein Übereinander- bzw. ein Ineinanderschieben) in Eingriff zu bringende, später noch genauer beschriebene Kartenträgerteil 2 dienen. Die Richtung, längs welcher das Kartenträgerteil 2 relativ zum Kontaktträgerteil 1 bewegt werden muß, um in dieses eingeschoben zu werden, ist bei den Darstellungen gemäß den Figuren 1A und 1B die horizontal nach rechts verlaufende Richtung und bei der Darstellung gemäß der Figur 1C die frontal in die Zeichnungsebene hinein verlaufende Richtung.

Die Kontaktfedern 12 weisen jeweils einen kuppenartig ausgebildeten, elastisch verformbaren (bewegbaren) Endabschnitt 122 auf. Dieser Endabschnitt 122 ist jeweils derjenige Teil der Kontaktfedern 12, mit welchem diese mit den Kontaktflächen (Oberflächenkontakten) der zu lesenden Karte(n) in Kontakt kommen.

Wie insbesondere aus der Figur 1A ersichtlich ist, sind die Kontaktfedern 12 teilweise durch die Platte 13 bedeckt. Die Platte 13 weist Aussparungen 131 auf, durch welche die Endabschnitte 122 der Kontaktfedern 12 hindurchragen können.

Die Aussparungen 131 sind derart positioniert, daß die Endabschnitte 122 der Kontaktfedern genau mit den Kontaktflächen der zu lesenden Karte zusammentreffen, wenn sich diese innerhalb der Kartenlesevorrichtung in ihrer Lesestellung befindet. Im betrachteten Beispiel sind, da die zu lesende Karte ein SIM-Modul ist, insgesamt sechs Kontaktfedern 12 vorgesehen, die in zwei, jeweils drei Kontaktfedern 12 umfassenden Reihen angeordnet sind.

Die Platte 13 weist an ihren den erhöhten Randabschnitten 112 des Isolierkörpers 11 zugewandten Seiten jeweils Erhebungen 132 und 133 auf, welche sich im wesentlichen parallel zu den erhöhten Randabschnitten 112 in geringem Abstand zu diesen erstrecken und, wie insbesondere aus den Figuren 1B und 1C ersichtlich ist, teilweise die in den Randabschnitten 112 vorgesehenen nutenartigen Aussparungen 113 bedecken.

Die Erhebungen 132 und 133 der Platte 13 stehen beim Einschieben des Kartenträgerteils 2 in die nutenartigen Aussparungen 113 des Kontaktträgerteils 1 hindernd im Weg. Die Platte 13 kann jedoch, wie noch genauer beschrieben werden wird, durch das Kartenträgerteil 2 zur Leiterplatte hin aus dem Weg gedrückt werden. Dies hat zweierlei Auswirkungen: Zum einen kann das Kartenträgerteil 2 danach im wesentlichen ungehindert in das Kontaktträgerteil 1 eingeschoben werden, und zum anderen werden durch das Wegdrücken der Platte 13 nicht nur diese selbst, sondern auch die Kontaktfedern 12 (insbesondere deren Endabschnitte 122) weggedrückt.

Das Wegdrücken der Kontaktfedern 12 wird durch das Wegdrücken der Platte 13 bewirkt; die Kontaktfedern 12, genauer gesagt insbesondere deren Endabschnitte 122 werden von der Platte 13 mitgenommen.

Das Wegdrücken der Platte 13 durch das Kartenträgerteil 2 wird durch Erhebungen des Kartenträgerteils 2 bewirkt, welche beim Einschieben des Kartenträgerteils 2 in das Kontaktträgerteil 1 über die Erhebungen 132 und 133 der Platte 13 unter Wegdrücken derselben hinweglaufen. Damit die Erhebungen des Kartenträgerteils 2, welche sich von Haus aus auf der selben Höhe wie die Erhebungen 132 und 133 der Platte 13 befinden, widerstandsarm über diese hinweglaufen können, weisen die Erhebungen 132 und 133, wie insbesondere aus der Figur 1B ersichtlich ist, an ihren vorderen und hinteren Enden Auflaufschrägen auf.

Im vollständig in das Kontaktträgerteil 1 eingeschobenen Zustand des Kartenträgerteils 2 befindet sich eine im Kartenträgerteil 2 aufgenommene (zu lesende) Karte automatisch in ihrer Lesestellung. In diesem Zustand haben die Erhebungen des Kartenträgerteils 2 die Erhebungen 132, 133 des Kontaktträgerteils 1 so weit überquert, daß das aktive Wegdrücken der Platte 13 durch das Kartenträgerteil 2 beendet ist. Die Platte 13 wird durch die Federkraft der Kontaktfedern 12 in Richtung ihrer ursprünglichen Stellung zurückgedrückt, und zwar so weit, bis diese, genauer gesagt deren kuppenartige Endabschnitte 122 die zu lesende Karte (deren Kontaktflachen) erreichen und dadurch kontaktieren.

Damit das Kartenträgerteil 2 nicht einfach aus dem Kontaktträgerteil 1 herausfallen kann, weist das Kontaktträgerteil 2, genauer gesagt der Isolierkörper 11 desselben ein oder mehrere Rastelemente in Form von Rastnasen 114 auf, welche im vollständig in das Kontaktträgerteil 1 eingeschobenen Zustand des Kartenträgerteils 2 mit zugeordneten Rastelementen (Rastvertiefungen) des Kartenträgerteils 2 verrasten.

Das zuvor bereits mehrfach erwähnte Kartenträgerteil 2 ist in den Figuren 2A, 2B und 2C detailliert dargestellt und dort mit dem Bezugszeichen 2 bezeichnet.

Das Kartenträgerteil 2 ist einstückig ausgebildet; es weist einen Entriegelungsabschnitt 21 und einen Kartenaufnahmeabschnitt 22 auf.

Der Kartenaufnahmeabschnitt 22 weist, wie insbesondere aus der Figur 2A ersichtlich ist, eine dort durch gestrichelte Linien dargestellte, als Kartenauflagefläche dienende wannenartige Vertiefung 221 auf, in welche die zu lesende Karte einsetzbar ist. Die wannenartige Vertiefung 221 ist an die Form der zu lesenden Karte angepaßt; sie weist wie die bei der betrachteten Kartenlesevorrichtung als Karten zu verwendenden SIM-Module eine sogenannte Codierungsschräge 222 auf, durch welche ein falsch orientiertes Einlegen des SIM-Moduls in die wannenartige Vertiefung 221 verhindert werden soll.

Die wannenartige Vertiefung 221 weist, wie insbesondere aus den Figuren 2A und 2B ersichtlich ist, in ihrem Boden Öffnungen 223 und 224 auf, welche es ermöglichen, eine in die wannenartige Vertiefung 221 eingesetzte Karte von jenseits des Bodens aus der wannenartigen Vertiefung 221 herauszudrücken und aus dem Kartentragerteil 2 zu entnehmen.

Vom Rand der wannenartigen Vertiefung 221 geht ein elastisch verformbar (biegbar) ausgebildetes, zungenartiges Element 225 ab, welches sich zumindest teilweise über die wannenartige Vertiefung 221 hinweg erstreckt.

Zwischen dieses zungenartige Element 225 und dem Boden der wannenartigen Vertiefung 221 muß eine zu lesende Karte eingeschoben werden, wenn sie ordnungsgemäß (bestimmungsgemäß) in das Kartenträgerteil 2 eingesetzt werden soll.

Zum Einstecken der Karte zwischen das zungenartige Element 225 und den Boden der wannenartigen Vertiefung 221 läßt sich das zungenartige Element 225 elastisch nach oben biegen, und im bestimmungsgemäß in die wannenartige Vertiefung 221 eingesetzten Zustand der Karte drückt das zungenartige Element 225 die Karte gegen den Boden der wannenartigen Vertiefung 221.

Wie insbesondere aus der Figur 2C ersichtlich ist, weist der Kartenaufnahmeabschnitt 22 an dessen beim Einschieben des Kartentragerteils 2 in das Kontaktträgerteil 1 den erhöhten Randabschnitten 112 des Kontaktträgerteils 1 zugewandten Seiten erhöhte Randabschnitte 226 auf.

Die Randabschnitte 226 sind nach außen hin derart gestaltet, daß sie beim Einschieben des Kartenträgerteils 2 in das Kontaktträgerteil 1 in den nutenartigen Aussparungen 113 des Kontaktträgerteils 1 laufen und in diesen geführt werden.

Die nach innen weisenden Bereiche der Randabschnitte sind, wie insbesondere aus den Figuren 2B und 2C ersichtlich ist, mit Erhebungen 227 und 228 versehen, die derart positioniert und gestaltet sind, daß sie beim Einschieben des Kartenträgerteils 2 in das Kontaktträgerteil 1 über die Erhebungen 132 und 133 der Platte 13 des Kontaktträgerteils 1 hinweglaufen und einhergehend damit die Platte 13 zusammen mit den kuppenartigen Endabschnitten 122 der Kontaktfedern 12 des Kontaktträgerteils 1 aus dem Einschubweg drücken. Die Erhebungen 227 und 228 des Kartenträgerteils 1 sind wie die Erhebungen 132 und 133 der Kontaktträgerteils 1 mit Auflaufschrägen versehen.

Die Funktion und die Wirkungsweise der Erhebungen 227 und 228 und deren Zusammenwirken mit den Erhebungen 132 und 133 des Kontaktträgerteils 1 wurden bereits bei der Beschreibung des Kontaktträgerteils 1 ausführlich beschrieben und bedürfen an dieser Stelle keiner weiteren Erläuterung.

Das Kartenträgerteil 2, genauer gesagt dessen Kartenaufnahmeabschnitt 22 weist an dessen bezüglich der Einschubrichtung vorderen Ende ein oder mehrere Rastelemente in Form von Rastvertiefungen 229 auf, welche im in das Kontaktträgerteil 1 eingeschobenen Zustand des Kartenträgerteils 2 mit den Rastnasen 114 des Kontaktträgerteils 1 verrasten und dadurch ein unbeabsichtigtes Entfernen des Kartenträgerteils 2 aus dem Kontaktträgerteil 1 verhindern.

Das Lösen dieser Rastverbindung ist mit Hilfe des zuvor bereits erwähnten Entriegelungsabschnittes 21 des Kartenträgerteils 2 bewerkstelligbar.

Der Entriegelungsabschnitt 21 ist durch zwei elastisch verformbare Verbindungselemente 211 und 212 desselben mit dem Kartenaufnahmeabschnitt 22 verbunden. Sofern das Kartenträgerteil 2 aus Kunststoff hergestellt ist, können die besagten Verbindungselemente 211 und 212 als Filmscharniere ausgebildet sein.

Außer den Verbindungselementen 211 und 212 weist der Entriegelungsabschnitt 21 noch zwei nebeneinander angeordnete Kipphebel 213 und 214 und einen zwischen diesen vorgesehenen Kipphebelbetätigungsabschnitt auf; die Verbindungselemente 211 und 212 sind mit den voneinander abgewandten Armen der Kipphebel 213 und 214 verbunden.

Für den Fall, daß der Entriegelungsabschnitt 21 aus Kunststoff hergestellt ist, können die Kipphebel 213 und 214 "einfach" als starre, d.h. im wesentlichen nicht elastisch verformbare Abschnitte des Entriegelungsabschnittes 21 ausgebildet sein.

Der erste Kipphebel 213 weist ungefähr in dessen Mitte ein Abstützelement 215 auf, welches im mit dem Kontaktträgerteil 1 verrasteten Zustand des Kartenträgerteils 2 gegen das Kontaktträgerteil 1 anstößt; der zweite Kipphebel 214 weist ungefähr in dessen Mitte ein Abstützelement 216 auf, welches im mit dem Kontaktträgerteil 1 verrasteten Zustand des Kartenträgerteils 2 gegen das Kontaktträgerteil 1 anstößt. Es sei bereits an dieser Stelle darauf hingewiesen, daß die jeweiligen Abstützelemente 215, 216 nicht jeweils in der Mitte der jeweiligen Kipphebel 213 und 214 vorgesehen sein müssen, sondern insbesondere in Abhängigkeit von den gewünschten oder erforderlichen Hebelverhältnissen auch von beliebigen anderen Stellen des jeweiligen Kipphebels abgehen können. Die Abstützelemente 215 und 216 müssen auch nicht unbedingt gegen das Kontaktträgerteil 1 anschlagen; sie können auch anderswo anschlagen, beispielsweise gegen einen Teil des Gerätes, in welchem die erfindungsgemäße Kartenlesevorrichtung eingebaut ist.

Die Abstützelemente 215 und 216 und die Stellen, an welchen diese anschlagen (Abstützstellen), sind derart ausgebildet, daß Schwenkbewegungen der Kipphebel 213 und 214 nicht durch eine übermäßige Reibung oder ein Verkanten der Abstützelemente 215 und 216 an den Abstützstellen behindert werden.

Die einander zugewandten Arme der Kipphebel 213 und 214 sind über den Kipphebelbetätigungsabschnitt miteinander verbunden (elastisch aneinander gekoppelt).

Der Kipphebelbetätigungsabschnitt besteht aus einem in etwa mittig angeordneten Druckkraftansatzabschnitt 217 und zwei elastisch verformbaren (biegbaren) Verbindungselementen 218 und 219.

Der Druckkraftansatzabschnitt 217 ist ein starr, d.h. im wesentlichen unverformbar ausgebildeter Abschnitt des Entriegelungsabschnittes 21. Die Ausübung eines Drucks auf den Druckkraftansatzabschnitt hat, wie noch im einzelnen beschrieben werden wird, ein Lösen des Kartenaufnahmeabschnittes 22 vom Kontaktträgerteil 1 und ein teilweises Herausschieben aus demselben zur Folge. Der Druckkraftansatzabschnitt 217 weist im betrachteten Beispiel an einer zentralen Stelle eine in etwa halbkugelförmige Vertiefung auf, welche das Aufbringen der erforderlichen Druckkraft auf den Druckkraftansatzabschnitt 217 durch Ansetzen und Eindrücken eines Stiftes wie beispielsweise eines Kugelschreibers gestattet.

Der Druckkraftansatzabschnitt 217 ist über die Verbindungselemente 218 bzw. 219 mit den einander zugewandten Armen der Kipphebel 213 bzw. 214 verbunden.

Die Verbindungselemente 218 und 219 sind elastisch verformbar (biegbar) ausgebildete Abschnitte des Entriegelungsabschnittes 21. Sofern der Entriegelungsabschnitt 21 aus Kunststoff gefertigt ist, können die Verbindungselemente 218 und 219 als Filmscharniere ausgebildet sein.

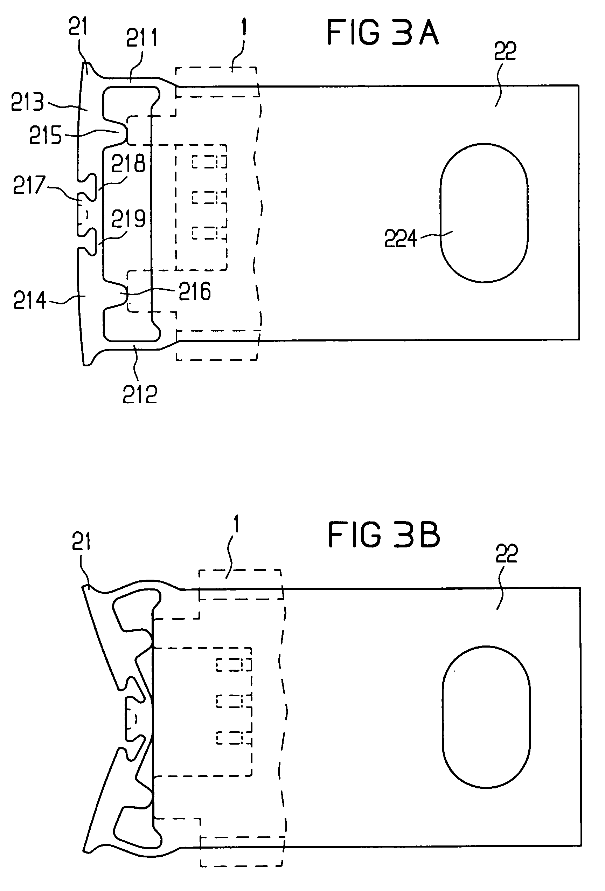

Die Funktion und Wirkungsweise des wie vorstehend beschrieben aufgebauten Entriegelungsabschnittes 21 wird nachfolgend anhand der Figuren 3A und 3B beschrieben.

Die Figuren 3A und 3B zeigen jeweils Zustände, in welchen das Kartenträgerteil 2 in das Kontaktträgerteil 1 eingeschoben ist. Das Kontaktträgerteil 1 ist dabei jeweils "nur" durch gestrichelte Linien dargestellt.

Gemäß der Darstellung in der Figur 3A ist das Kartenträgerteil 2 vollständig in das Kontaktträgerteil 1 eingeschoben und durch Verrasten der einander zugeordneten Rastelemente mit diesem verbunden; der durch den Entriegelungsabschnitt 21 gebildete Auswurfmechanismus ist nicht betätigt und befindet sich in seiner Ausgangs- bzw. Ruhestellung. In diesem Zustand schließt das Kartenträgerteil 2 vorzugsweise bündig mit dem Gehäuse des Gerätes ab, in welches die beschriebene Kartenlesevorrichtung eingebaut ist. Der Kipphebelbetätigungsabschnitt des Entriegelungsabschnittes 21 ist von der gemäß der Darstellung in der Figur 3A linken Seite her frei zugänglich.

Wie aus der Figur 3A ersichtlich ist, schlagen die Abstützelemente 215 und 216 im gezeigten Zustand des Kartenträgerteils 2 am Kontaktträgerteil 1 an. Die Stellen des Kontaktträgerteils 1 oder sonstiger Gegenstände, an welchen die Abstützelemente 215 und 216 anschlagen, sind vorzugsweise ortsfest und unverformbar ausgebildete Stellen.

Will man das Kartenträgerteil 2 aus dem Kontaktträgerteil 1 entfernen, so bedarf es hierzu der Betätigung des Auswurfmechanismus. Die Betätigung des Auswurfmechanismus erfolgt dadurch, daß auf den (von außen zugänglichen) Druckkraftansatzabschnitt 217 eine Druckkraft ausgeübt wird. Dies kann, wie vorstehend bereits angedeutet wurde, beispielsweise durch Eindrücken eines Kugelschreibers oder dergleichen in die halbkugelförmige Vertiefung des Druckkraftansatzabschnittes 217 bewerkstelligt werden.

Durch das Ausüben einer Druckkraft auf den Druckkraftansatzabschnitt 217 verläßt der Entriegelungsabschnitt 21 des Kartenträgerteils 2 seine in der Figur 3A gezeigte Ruhestellung und wird im Ergebnis wie in Figur 3B gezeigt verformt. Die in der Figur 3B gezeigte Verformung des Entriegelungsabschnittes 21 bleibt jedoch nur aufrechterhalten, so lange eine Druckkraft auf den Druckkraftansatzabschnitt 217 ausgeübt wird. Wird die auf den Druckkraftansatzabschnitt 217 wirkende Druckkraft zurückgenommen, kehrt der Entriegelungsabschnitt 21 der Kartenträgerteils 2 in die in der Figur 3A gezeigte Ausgangs- bzw. Ruhestellung zurück, wobei jedoch dann das Kartenträgerteil 2 bereits ein Stück aus dem Kontaktträgerteil 1 herausgezogen ist, die Abstützelemente 215, 216 also anders als bei der Darstellung in der Figur 3A nicht mehr an das Kontaktträgerteil 1 anschlagen.

Das Ausüben einer Druckkraft auf den Druckkraftansatzabschnitt 217 löst im Entriegelungsabschnitt 21 die folgenden Vorgänge aus:

Durch die Druckkraft auf den Druckkraftansatzabschnitt 217 wird dieser in Richtung der wirkenden Druckkraft verschoben. Die elastisch biegbaren Verbindungselemente 218 und 219 folgen der Bewegung des Druckkraftansatzabschnittes 217 und ziehen dabei an den Armen der Kipphebel 213 und 214, mit welchen sie verbunden sind. Das Ziehen an den einander zugewandten Armen der Kipphebel bewirkt, daß diese sich um die am Kontaktträgerteil 1 anschlagenden Abstützelemente 215 und 216 in einander entgegengesetzte Richtungen drehen. Dies wiederum hat zur Folge, daß auf die Verbindungselemente 211 und 212, welche die voneinander abgewandten Arme der Kipphebel 213 und 214 mit dem Kartenaufnahmeabschnitt 22 verbinden, eine Zugkraft wirkt. Diese auf die Verbindungselemente 211 und 212 wirkende Zugkraft hat zur Folge, daß diese am Kartenaufnahmeabschnitt 22 des Kartenträgerteils 2 ziehen. Durch das Ziehen am Kartenaufnahmeabschnitt 22 kommen die ursprünglich miteinander verrasteten Rastelemente 114 und 229 außer Eingriff, und mehr oder weniger gleichzeitig gelangen die Erhebungen 227 und 228 des Kartenträgerteils 2 über die Erhebungen 132 und 133 der Platte 13 des Kontaktträgerteils 1. Im Ergebnis wird das Kartenträgerteil 2 (dessen Kartenaufnahmeabschnitt 22) dadurch unter Wegdrücken der Platte 13 ein Stück aus dem Kontaktträgerteil 1 herausgezogen.

Nimmt man in diesem (in der Figur 3B veranschaulichten) Zustand die auf den Druckkraftansatzabschnitt 217 wirkende Druckkraft zurück, so entspannt sich der elastisch deformierte Entriegelungsabschnitt 21, und das gesamte Kartenträgerteil 2 steht nun so weit aus dem die beschriebene Kartenlesevorrichtung enthaltenden Gerät heraus, daß es durch Greifen des herausstehenden Teils, d.h. durch Greifen des Entriegelungsabschnittes 21 manuell vollständig aus dem Kontaktträgerteil 1 herausgezogen werden kann.

Beim Entfernen des Kartenträgerteils 2 aus dem Kontaktträgerteil 1 laufen die selben Vorgänge ab wie es auch beim Einschieben der Fall war. D.h., die Erhebungen 227 und 228 des Kartenträgerteils 2 laufen über die Erhebungen 132 und 133 des Kontaktträgerteils 1 hinweg und drücken dadurch die Platte 13 und die Kontaktfedern 12 von sich weg, wodurch die Kontaktfedern von der Karte, genauer gesagt deren Kontaktstellen getrennt werden und die Gefahr eines Kurzschlusses eliminiert wird.

Der beschriebene Auswurfmechanismus ist unter Vorsehen einer minimalen Anzahl von separaten Einzelteilen als kompakter Mechanismus realisierbar.

Bei dem beschriebenen Auswurfmechanismus kommen zwei nebeneinander angeordnete Kipphebel zum Einsatz. Wenngleich dies derzeit nicht zuletzt wegen der besonderen Zuverlässigkeit im praktischen Gebrauch und der einfachen Herstellbarkeit als die vorteilhafteste Ausführungsform erscheinen mag, so besteht hierauf gleichwohl keine Einschränkung; es ist vielmehr eine Vielzahl von Abwandlungen denkbar. So kann beispielsweise auch in Betracht gezogen werden, nur einen einzigen Kipphebel vorzusehen und/oder anstatt der verwendeten Kipphebel andersartige Hebel zu verwenden.

Zusammenfassend kann festgestellt werden, daß eine Kartenlesevorrichtung gefunden wurde, deren Kartenträgerteil auf einfache Weise unter Verwendung eines klein und einfach aufgebauten Mechanismus aus dem Kontaktträgerteil entfernbar ist.

## Patentansprüche

1. Kartenlesevorrichtung mit einem Kontaktträgerteil (1) und einem Kartenträgerteil (2), wobei das Kartenträgerteil mit einem Kartenaufnahmeabschnitt (22) zur Aufnahme einer zu lesenden Karte ausgebildet und zusammen mit der dort eingesetzten Karte zumindest teilweise in das oder auf das Kontaktträgerteil schiebbar ist,
**dadurch gekennzeichnet,**
daß das Kartenträgerteil einen mindestens einen Hebel (213, 214) enthaltenden Mechanismus aufweist, wobei der mindestens eine Hebel derart ausgebildet und angeordnet ist, daß ein Schwenken desselben im Zusammenwirken mit einer außerhalb des Kartenträgerteils liegenden Abstützstelle ein zumindest teilweises Herausziehen des Kartenaufnahmeabschnittes aus dem Kontaktträgerteil zur Folge hat.

2. Kartenlesevorrichtung nach Anspruch 1,
**dadurch gekennzeichnet,**
daß der den mindestens einen Hebel (213, 214) enthaltende Mechanismus in einem mit dem Kartenaufnahmeabschnitt (22) verbundenen Entriegelungsabschnitt (21) des Kartenträgerteils (2) untergebracht ist.

3. Kartenlesevorrichtung nach Anspruch 2,
**dadurch gekennzeichnet,**
daß der Entriegelungsabschnitt (21) an dem bezüglich der Richtung, längs welcher das Kartenträgerteil (2) relativ zum Kontaktträgerteil (1) zu bewegen ist, um in dieses oder auf dieses geschoben zu werden, hinteren Ende des Kartenträgerteils angeordnet ist.

4. Kartenlesevorrichtung nach einem der vorhergehenden Ansprüche,
**dadurch gekennzeichnet,**
daß der mindestens einen Hebel enthaltende Mechanismus zwei nebeneinander angeordnete Kipphebel (213, 214) enthält.

5. Kartenlesevorrichtung nach Anspruch 4,
**dadurch gekennzeichnet,**
daß jeder der Kipphebel (213, 214) mit einem Abstützelement (215, 216) versehen ist, welches im in das oder auf das Kontaktträgerteil (1) geschobenen Zustand des Kartenträgerteils (2) am Kontaktträgerteil anschlägt.

6. Kartenlesevorrichtung nach Anspruch 4 oder 5,
**dadurch gekennzeichnet,**
daß die einander zugewandten Arme der Kipphebel (213, 214) über einen zumindest teilweise elastisch ausgebildeten Kipphebelbetätigungsabschnitt miteinander verbunden sind.

7. Kartenlesevorrichtung nach Anspruch 6,
**dadurch gekennzeichnet,**
daß der Kipphebelbetätigungsabschnitt einen Druckkraftansatzabschnitt (217) aufweist und derart ausgebildet ist, daß das Ausüben einer Druckkraft auf den Druckkraftansatzabschnitt ein Schwenken der Kipphebel (213, 214) um die Abstützelemente (215, 216) bewirkt.

8. Kartenlesevorrichtung nach einem der Ansprüche 4 bis 7,
**dadurch gekennzeichnet,**
daß die voneinander abgewandten Arme der Kipphebel (213, 214) über elastisch ausgebildete Verbindungselemente (211, 212) mit dem Kartenaufnahmeabschnitt (22) verbunden sind.

9. Kartenlesevorrichtung nach Anspruch 8,
**dadurch gekennzeichnet**,
daß die Verbindungselemente (218, 219) diejenigen Bestandteile des Entriegelungsabschnittes (21) sind, über welche dieser mit dem Kartenaufnahmeabschnitt (22) verbunden ist.
